# EUROPÄISCHE PATENTSCHRIFT

(11) **EP 1 119 461 B1**
(45) Veröffentlichungstag und Bekanntmachung des Hinweises auf die Patenterteilung: **12.06.2002**
(21) Anmeldenummer: 99947471.1
(22) Anmeldetag: 05.10.1999
(51) Int. Cl.: B60C 17/00, B60C 1/00

(54) **FAHRZEUGLUFTREIFEN**
AUTOMOBILE PNEUMATIC TIRES
PNEU DE VEHICULE

(30) Priorität: 05.10.1998 DE 19845724
(43) Veröffentlichungstag der Anmeldung: 01.08.2001
(73) Patentinhaber: Dunlop GmbH, 63450 Hanau (DE)
(72) Erfinder: GERRESHEIM, Manfred, D-63179 Obertshausen-Hausen (DE); BAUMANN, Karlheinz, D-63571 Gelnhausen (DE); DIETRICH, Günter, D-60431 Frankfurt (DE)
(74) Vertreter: Manitz, Finsterwald & Partner GbR
(86) Internationale Anmeldenummer: EP9907438
(87) Internationale Veröffentlichungsnummer: WO0020235

(56) Entgegenhaltungen:
- EP-A- 0 822 105
- US-A- 5 511 599

## Beschreibung

Die Erfindung betrifft Fahrzeugluftreifen von der im Oberbegriff des Patentanspruchs 1 angegebenen Art.

Ein Fahrzeugluftreifen dieser Art ist bekannt aus der EP 0 822 105 A2. Ferner wird in der US-PS 5 511 599 ein ähnlicher Fahrzeugluftreifen dieser Art beschrieben. Mittels derartiger Reifen ist es möglich, im Falle einer Reifenpanne auch mit entlüftetem Reifen noch größere Strecken mit adäquater Geschwindigkeit zurückzulegen bevor eine Reparatur des Reifens oder ein Reifenwechsel vorgenommen werden muß. Derartige Reifen erhöhen demgemäß die Sicherheit im Falle einer Reifenpanne und ermöglichen es, problemfrei die nächste Reparaturwerkstätte zu erreichen, so daß unerwünschte und auf stark befahrenen Straßen auch gefährliche Reifenwechsel vermieden werden können.

Aufgabe der vorliegenden Erfindung ist es, einen Fahrzeugluftreifen der eingangs angegebenen Art so auszugestalten, daß auch im entlüfteten Zustand eine hohe Fahrleistung mit ausreichend hoher Geschwindigkeit ermöglicht wird, die in den Seitenwänden vorgesehenen versteifenden Gummilagen den Fahrkomfort des mit Normaldruck betriebenen Reifens nicht störend beeinträchtigen und dabei das Reifengewicht möglichst gering bleibt.

Gelöst wird diese Aufgabe ausgehend von einem Fahrzeugluftreifen der eingangs angegebenen Art dadurch, daß sich die drei Gummiverstärkungslagen ausgehend vom Kernreiterbereich mit gegeneinander versetzten Enden bis unter den Randbereich der Gürtellage erstrecken, und daß alle Gummiverstärkungslagen sowie der Kernreiter aus der gleichen Gummimischung bestehen, deren Elastizitätsmodul der Gummiverstärkungslagen sowie des Kernreiters, gemessen bei 70°C, gleich oder größer 9 MPa und der tanδ gleich oder kleiner 0,03 ist, und zwar gemessen mittels "EPLEXOR": 10 Hz, 10 % Vorspannung und 1 % DSA (Double Strain Amplitude).

Aufgrund der Wahl der Gummimischung, des Dickenverlaufs der Gummiverstärkungslagen und der jeweils in Abhängigkeit von der Position der Gummiverstärkungslagen im Reifen unterschiedlichen Härtezeiten dieser Gummiverstärkungslagen werden hinsichtlich der Langlaufeigenschaften bei entlüftetem Reifen optimale Werte erhalten. Die Härte IRHD der Gummiverstärkungslagen sowie des Kernreiters soll bei Raumtemperatur gemessen gleich oder größer 80 sein. Die Messung der IRDH (International Rubber Hardness Degree) erfolgt dabei analog der Shore-Härtemessung, jedoch mit kugelförmiger Meßspitze. Die Messung bzw. Prüfung erfolgt dabei nach DIN 53519, wobei die sogenannte Mikrohärte bestimmt wird, da kleine Proben gemessen werden, die aus dem jeweiligen Reifen entnommen sind.

Die Gummiverstärkungslagen und die Kernreiter werden bevorzugt aus einer Gummimischung hergestellt, die aus einem Polymerverschnitt aus NR/IR und BR besteht, wobei mindestens 50 Teile NR/IR in diesem Polymerverschnitt enthalten sind, einem Rußgehalt von 50 bis 60 Teilen, vorzugsweise aus schnellspritzbarem FEF-Ruß, sowie aus 5 bis 8 Teilen Zinkoxid, 2 Teilen Stearinsäure, 1,5 Teilen Alterungsschutzmittel sowie ein oder mehr Teile Vulkanisationsbeschleuniger und Schwefel (vorzugsweise 4 bis 5 Teile), um die Verlusteigenschaften der Mischung gering zu halten. Es handelt sich hier um Gewichtsteile.

Eine vorteilhafte Ausführungsform zeichnet sich dadurch aus, daß alle Gummiverstärkungslagen zu ihren freien Enden hin im Querschnitt spitz zulaufend ausgebildet sind.

Für den Fall, daß das radiale innere Ende der äußeren Gummiverstärkungslage gleichzeitig als Kernreiter ausgebildet ist, ist vorgesehen, daß gemessen im Bereich maximaler Wulstdicke (Seitenwandhöhe W) die Dikke der inneren Gummiverstärkungslage etwa 2,5 mm, der mittleren Gummiverstärkungslage etwa 1,9 mm und der äußeren Gummiverstärkungslage etwa 6,9 mm beträgt, wobei für alle Meßwerte eine Toleranz von +/- 0,5 mm gilt.

Weitere vorteilhafte Ausgestaltungen der Erfindung sind in Unteransprüchen angegeben und werden auch bei der Beschreibung der Ausführungsbeispiele erläutert.

Die Erfindung wird nachfolgend anhand von Ausführungsbeispielen unter Bezugnahme auf die Zeichnung näher erläutert; in der Zeichnung zeigt:
- Figur 1: eine schematische Axialschnittdarstellung einer Hälfte eines mittensymmetrisch ausgebildeten Reifens,
- Figur 2: eine schematische Darstellung zur Erläuterung der Höhen- und Dickenabmessungen der im Reifen nach Figur 1 verwendeten Gummiverstärkungseinlagen, und
- Figur 3: eine Schnittdarstellung einer Reifenhälfte gemäß einer bevorzugten Ausführungsform der Erfindung.

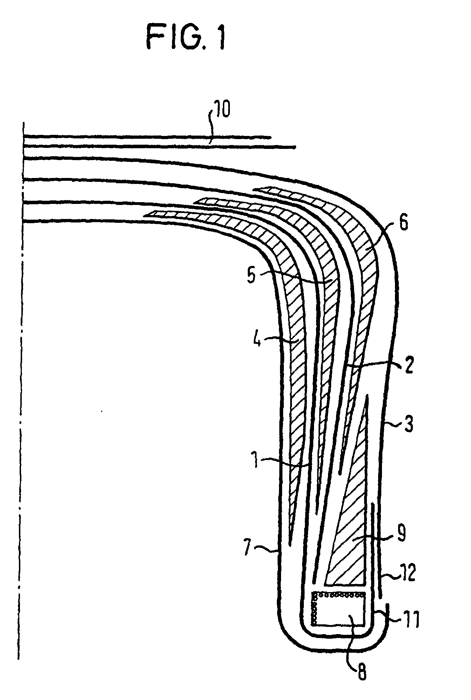

Nach Figur 1 besitzt der Reifen eine dreilagige Karkasse, die aus einer innenliegenden Karkasslage 1, einer mittleren Karkasslage 2 und einer radial äußeren Karkasslage 3 besteht.
Die innere Karkasslage 1 ist um den Wulst 8 geführt und erstreckt sich außenseitig mit ihrem Endbereich 11 zumindest bis zur halben Höhe des Kernreiters 9und ist unter Ausbildung eines Überlappungsbereichs mit der radial äußeren Karkasslage 3 verbunden.
Die mittlere Karkasslage 2 endet axial innerhalb des Kernreiters 9 und erstreckt sich etwa bis zum Wulst 8.

Eine erste Gummiverstärkungslage 4 ist axial innerhalb der ersten Karkasslage 1 und zwischen dieser ersten Karkasslage 1 und einer Innengummierungsschicht 7 angeordnet.
Eine zweite Gummiverstärkungslage 5 befindet sich zwischen der ersten Karkasslage 1 und der mittleren Karkasslage 2, während eine dritte Gummiverstärkungsschicht 6 zwischen der mittleren Karkasslage 2 und der äußeren Karkasslage 3 angeordnet ist.

Von wesentlicher Bedeutung für die Laufleistung des Reifens im entlüfteten Zustand sowie auch für das Verhalten im Normallauf ist einerseits die Ausgestaltung der Gummiverstärkungslagen hinsichtlich ihrer radialen Höhe und ihres Dickenverlaufs über die Höhe und zum anderen die für die Gummiverstärkungslagen verwendete Mischung.

Alle Gummiverstärkungslagen 4, 5, 6 besitzen unterschiedliche Höhe und über ihre Höhe jeweils einen unterschiedlichen Dickenverlauf.

Die Gummiverstärkungslagen bestehen aus einer Gummimischung aus Verschnitten von NR und/oder IR und BR, sowie Ruß, Zinkweiß, Stearinsäure, Alterungsschutzmittel, Weichmacher, Schwefel und Beschleuniger.
Bevorzugt werden Verstärkungslagen und Kernreiter hergestellt aus einer Gummimischung, bestehend aus einem Polymerverschnitt aus NR/IR und BR mit mindestens 50 Teilen NR/IR, einem Rußgehalt von 50 bis 60 Teilen, 5 bis 8 Teilen Zinkoxid, 2 Teilen Stearinsäure, 1,5 Teilen Alterungsschutzmittel sowie zumindest ein Teil Vulkanisationsbeschleuniger und Schwefel. Es werden bevorzugt 4 bis 5 Teile Schwefel verwendet, um die Verlusteigenschaften der Mischung gering zu halten.

Die für die Gummiverstärkungseinlagen und den Kernreiter bestimmte Gummimischung muß in der Weise gehärtet werden, daß die Gummiverstärkungslagen im fertigen Reifen folgende Eigenschaften besitzen:

Härte IRDH größer gleich 80, gemessen bei Raumtemperatur, Elastizitätsmodul (MPa) größer gleich 9 MPa und tanδ kleiner gleich 0,03, gemessen jeweils bei 70°C und mittels "EPLEXOR", 10 Hz, 10 % Vorspannung, 1 % DSA (Double Strain Amplitude).
Die IRDH-Messung (International Rubber Hardness Degree) erfolgt gemäß Prüfmethode DIN 53519 Blatt 2.

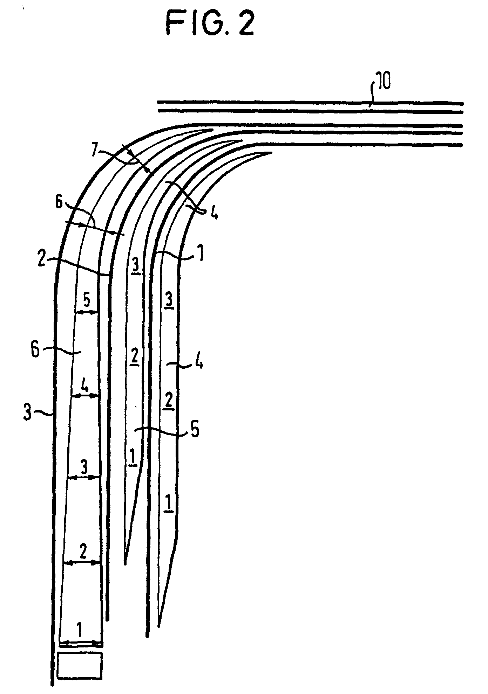

Figur 2 zeigt eine schematische Darstellung zur Erläuterung des Längenund Dickenverlaufs der drei Gummiverstärkungslagen eines Ausführungsbeispiels, wobei die nachfolgende Tabelle für jeden der Streifen neben dem Wert der Höhe den Dickenverlauf über die Höhe in Millimeter angibt.

| | Höhe (mm) | Dicke 1 (mm) | 2 | 3 | 4 | 5 | 6 | 7 |
|---|---|---|---|---|---|---|---|---|
| Gummilage 4 | 120 | 3,2 | 4,0 | 3,0 | 2,6 | -- | -- | -- |
| Gummilage 5 | 110 | 2,4 | 3,4 | 3,8 | 3,2 | -- | -- | -- |
| Gummilage 6 | 130 | 9,0 | 7,8 | 7,5 | 4,5 | 3,7 | 2,7 | 1,5 |

Die Toleranzen betragen dabei für die Höhe ± 3 mm und für die Dicke ± 0,3 mm.

Die über die Seitenwandhöhe verteilten Positionen 1 bis 7 gemäß Tabelle sind der Figur 2 zu entnehmen.

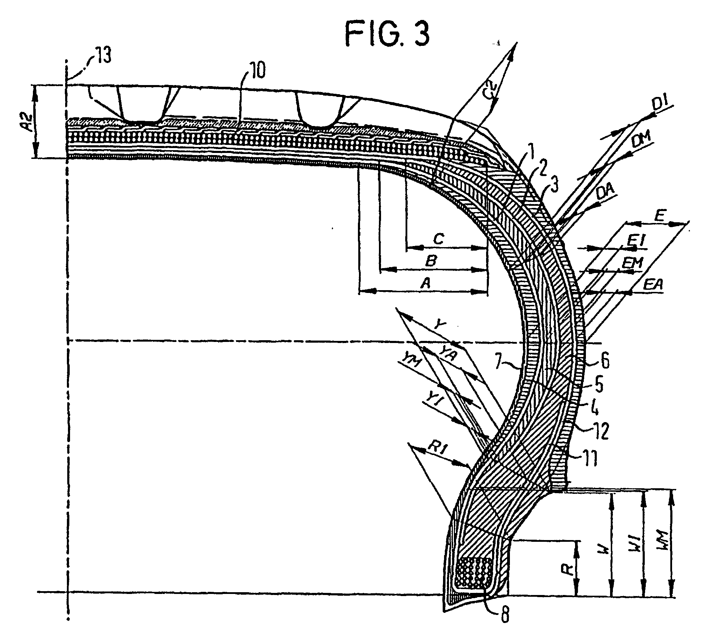

Figur 3 zeigt eine Schnittdarstellung einer Hälfte einer bevorzugten Ausführungsform eines Fahrzeugluftreifens nach der Erfindung. Der Grundaufbau dieses Reifens entspricht der Ausführungsform nach Fig. 1, aber es ist in diesem Falle die äußere Gummiverstärkungslage 6 integral, d.h. einteilig mit dem Kernreiter 9 ausgeführt.

In Figur 3 sind Meßstellen positionsgenau eingetragen, anhand derer für die Erfindung wesentliche Dickenwerte und Positionen angegeben werden können.

Die Reifendicke A2 in Kronenmitte beträgt bevorzugt 17,5 ± 0,8 mm, während die Reifendicke C2 an der Schulter an der angegebenen Stelle 18,5 ± 1,0 mm beträgt. Die Dicke Y des Wulstes beträgt an der angegebenen Stelle 20,0 ± 1,5 mm, während sich die Wulstdicke R1 an der angegebenen Stelle in Höhe des Maßes R auf 15,0 ± 1,5 mm beläuft.

Die Messung der Wulstdicke Y erfolgt in Höhe des in der Zeichnung eingetragenen Maßes W.

Für die Funktion des erfindungsgemäßen Fahrzeugluftreifens ist auch die gürtelseitige Position der Enden der Gummiverstärkungslagen 4, 5, 6 von Bedeutung. Diese Gummiverstärkungslagen erstrecken sich unter den Gürtel 10 und besitzen bezüglich des seitlichen Gürtelendes auch unterschiedliche Abstände.

Der entsprechende Abstand A für die innere Gummiverstärkungslage 4 beträgt 33,0 ± 2,5 mm, der Abstand B für die mittlere Gummiverstärkungslage 5 beträgt 22,0 ± 2,5 mm und der Abstand c für die äußere Gummiverstärkungslage 6 beträgt 15,0 ± 2,5 mm.

Die Gummiverstärkungslagen 4, 5, 6 besitzen über ihre radiale Höhe einen aus der Figur 3 ersichtlichen charakteristischen Dickenverlauf, der durch die in der Figur 3 an den angegebenen Meßstellen vorhandenen Dickenwerte charakterisiert ist. An der Meßstelle D, die etwa in Höhe von 2/3 der Seitenwandhöhe gelegen ist, besitzt die innere Gummiverstärkungslage 4 eine Dicke von 3,0 ± 0,5 mm, die mittlere Gummiverstärkungslage 5 eine Dicke von 2,8 ± 0,5 mm und die äußere Gummiverstärkungslage 6 eine Dicke von 2,9 ± 0,5 mm.

An der Meßstelle E in halber Seitenwandhöhe beträgt die Dicke der inneren Gummiverstärkungslage 3,2 ± 0,5 mm, die Dicke der mittleren Gummiverstärkungslage 5 beträgt 2,9 ± 0,5 mm und die Dicke der äußeren Gummiverstärkungslage 6 beträgt 3,3 ± 0,5 mm.

An der Meßstelle Y besitzt in der angegebenen Ebene die innere Gummiverstärkungslage 4 eine Dicke von 2,5 ± 0,5 mm, die mittlere Gummiverstärkungslage 5 eine Dicke von 1,9 ± 0,5 mm und die äußere Gummiverstärkungslage, die gleichzeitig als Kernreiter ausgebildet ist, besitzt an dieser Stelle eine Dicke von 6,9 ± 0,5 mm.
Zwischen den bezüglich der definierten Meßstellen angegebenen Werten verändern sich die Dicken der Gummiverstärkungslagen 4, 5, 6 kontinuierlich.

Zu erwähnen ist auch noch, daß der Abstand zwischen dem Stahl- und dem Aramidbreaker im Vergleich zu einem Standardreifen um etwa 0,4 mm erhöht ist, um aufgrund des dadurch erhöhten Gummianteils eine weitere Reduzierung der Durchbiegung im luftleeren Zustand zu erzielen.

## Patentansprüche

1. Fahrzeugluftreifen mit einer Mehrlagenkarkasse, die sich zwischen zwei Kernreiter (9) aufweisenden Wulstkernen (8) erstreckt, einer zwischen den Karkasslagen (1, 2, 3) und einem Laufstreifen vorgesehenen Gürtelanordnung sowie in den Seitenwandbereichen angeordneten und bei entlüftetem Reifen Stützfunktion übernehmenden Gummiverstärkungslagen (4, 5, 6),
wobei eine erste Gummiverstärkungslage (4) radial innerhalb einer ersten Karkasslage (1),
eine zweite Gummiverstärkungslage (5) zwischen der ersten KarkassIage (1) und einer zweiten Karkasslage (2) und
eine dritte Gummiverstärkungslage (6) zwischen der zweiten Karkasslage (2) und einer dritten Karkasslage (3) angeordnet ist,
und die drei Gummilagen (4, 5, 6) in Radialrichtung unterschiedliche Höhe und über die Seitenwandhöhe unterschiedliche Dicken aufweisen, und
wobei die radial inneren Endbereiche aller drei Gummilagen (4, 5, 6) auf der axial inneren Seite des Kernreiters (9) gelegen sind und die radial innerste erste Karkasslage (1) mit ihren Enden (11) um den jeweiligen Wulstkern (8) geführt und mit dem jeweiligen Ende (12) der äußeren dritten Karkasslage (3) überlappend verbunden ist und die mittlere Karkasslage (2) axial innerhalb des Kernreiters (9) dem jeweiligen Wulstkern (8) benachbart endet,
**dadurch gekennzeichnet,**
**daß** sich die drei Gummiverstärkungslagen (4, 5, 6) ausgehend vom Kernreiterbereich mit gegeneinander versetzten Enden bis unter den Randbereich der Gürteflage (10) erstrecken, und
**daß** alle Gummiverstärkungslagen (4, 5, 6) sowie der Kernreiter (9) aus der gleichen Gummimischung bestehen,
deren Elastizitätsmodul (E*) der Gummiverstärkungslagen (4, 5, 6) sowie des Kernreiters (9), gemessen bei 70°C, gleich oder größer 9 MPa und der tanδ gleich oder kleiner 0,03 ist, und zwar gemessen mittels "EPLEXOR": 10 Hz, 10 % Vorspannung und 1 % DSA - Double Strain Amplitude.

2. Fahrzeugluftreifen nach Anspruch 1,
**dadurch gekennzeichnet,**
**daß** alle drei Gummiverstärkungslagen (4, 5, 6) über ihre Höhe unterschiedliche Dicke besitzen und die mittlere Gummiverstärkungslage (5) im Vergleich zur inneren und äußeren Gummiverstärkungslage (4, 6) über einen zumindest überwiegenden Teil der Seitenwandhöhe eine geringere Dicke besitzt.

3. Fahrzeugluftreifen nach einem der vorhergehenden Ansprüche,
**dadurch gekennzeichnet,**
**daß** die laufflächenseitigen Enden der Gummiverstärkungslagen (4, 5, 6) ausgehend von der radial innersten Lage (4) mit zunehmendem Abstand von der Reifenmittenebene (13) enden.

4. Fahrzeugluftreifen nach einem der vorhergehenden Ansprüche,
**dadurch gekennzeichnet,**
**daß** die radial äußere Gummiverstärkungslage (6) mit ihrem radial inneren Ende an der Innenseite des Kernreiters (9) anliegt

5. Fahrzeugluftreifen nach einem der vorhergehenden Ansprüche,
**dadurch gekennzeichnet,**
**daß** das radial innere Ende der äußeren Gummiverstärkungslage (6) gleichzeitig als Kernreiter ausgebildet ist.

6. Fahrzeugluftreifen nach einem der vorhergehenden Ansprüche,
**dadurch gekennzeichnet,**
**daß** alle Gummiverstärkungslagen (4, 5, 6) zu ihren freien Enden hin im Querschnitt spitz zulaufend ausgebildet sind.

7. Fahrzeugluftreifen nach einem der vorhergehenden Ansprüche,
**dadurch gekennzeichnet,**
**daß** die mittlere Karkasslage (2) in einem oberhalb des Wulstkernes (8) liegenden Bereich mit der radial inneren Karkasslage (1) verbunden ist.

8. Fahrzeugluftreifen nach einem der vorhergehenden Ansprüche,
**dadurch gekennzeichnet,**
**daß** die Karkasslagen (1, 2, 3) aus Rayon bestehen.

9. Fahrzeugluftreifen nach einem der vorhergehenden Ansprüche,
**dadurch gekenn*z*eichnet,**
daß die Gürtellagen (10) aus Kevlar oder Stahl bestehen.

10. Fahrzeugluftreifen nach Anspruch 9,
**dadurch gekennzeichnet,**
**daß** der Gürtel durch Zusatzgummi zwischen den Gürtellagen versteift ist

11. Fahrzeugluftreifen nach Anspruch 1,
**dadurch gekennzeichnet,**
**daß** die Härte IRHD der Gummiverstärkungslagen (4, 5, 6) sowie des Kernreiters (9) bei Raumtemperatur gemessen gleich oder größer 80 ist, wobei die Messung nach DIN 53915 erfolgt und dem Reifen entnommene kleine Proben gemessen werden.

12. Fahrzeugluftreifen nach Anspruch 1,
**dadurch gekenn*z*eichnet,**
daß die Gummiverstärkungslagen (4, 5, 6) aus einer Gummimischung bestehen, die sich aus einem Polymerverschnitt aus NR/IR und BR mit mindestens 50 Teilen NR/IR, einem Rußgehalt von 50 bis 60 Teilen, 5 bis 8 Teilen Zinkoxid, 2 Teilen Stearinsäure, 1,5 Teilen Alterungsschutzmittel sowie zumindest einem Teil Vulkanisationsbeschleuniger und Schwefel zusammensetzt, wobei der Schwefelanteil vorzugsweise 4 bis 5 Teile umfaßt und als Ruß vorzugsweise schnellspritzbarer FEF-Ruß verwendet ist.

13. Fahrzeugluftreifen nach einem der vorhergehenden Ansprüche,
**dadurch gekennzeichnet,**
**daß** die eine sich kontinuierlich ändernde Dicke aufweisenden Gummiverstäkungslagen (4, 5, 6) in der Summe ihre größte Dicke im Bereich der halben Seitenwandhöhe sowie im oberen Drittel der Seitenwandhöhe besitzen.

14. Fahrzeugluftreifen nach einem der vorhergehenden Ansprüche,
**dadurch gekennzeichnet,**
**daß** gemessen in etwa zwei Drittel der Seitenwandhöhe und in halber Seitenwandhöhe die Dicke der inneren Gummiverstärkungslage (4) 3,0 bzw. 3,2 mm, der mittleren Gummiverstärkungslage (5) 2,8 bzw. 2,9 mm und der äußeren Gummiverstärkungslage (6) 2,9 bzw. 3,3 mm beträgt, wobei für alle Meßwerte eine Toleranz von ± 0,5 mm gilt.

15. Fahrzeugluftreifen nach einem der vorhergehenden Ansprüche,
**dadurch gekennzeichnet,**
**daß** gemessen im Bereich maximaler Wulstdicke - Seitenwandhöhe W- die Dicke der inneren Gummiverstärkungslage (4) etwa 2,5 mm, der mittleren Gummiverstärkungslage (5) etwa 1,9 mm und der äußeren Gummiverstärkungslage (6) etwa 6,9 mm beträgt, wobei für alle Meßwerte eine Toleranz von ± 0,5 mm gilt.

16. Fahrzeugluftreifen nach einem der vorhergehenden Ansprüche,
**dadurch gekennzeichnet,**
**daß** bezogen auf die axial äußere Kante des Gürtels (10) das gürtelseitige Ende der inneren Gummiverstärkungslage (4) etwa 33 mm, der mittleren Gummiverstärkungslage (5) etwa 22 mm und der äußeren Gummiverstärkungslage (6) etwa 15 mm beabstandet ist, wobei für diese Meßwerte eine Toleranz von ± 2,5 mm gilt.

17. Fahrzeugluftreifen nach einem der vorhergehenden Ansprüche,
**dadurch gekennzeichnet,**
**daß** die in der Reifenmitte gemessene Kronendicke (A2) 17,5 ± 0,8 mm und die im Übergangsbereich der Schulter und im Bereich der Enden der Gummiverstärkungslagen (4, 5, 6) gemessene Reifendicke (C2) 18,5 ± 1,0 mm beträgt.

## Claims

1. Pneumatic vehicle tires comprising a multi-ply carcass, which extends between two bead rings (8) having bead apexes (9), a belt arrangement provided between the carcass plies (1, 2, 3) and a tread strip and also rubber reinforcing plies (4, 5, 6) arranged in the side wall regions, which take on a supporting function with a deflated tire,
wherein a first rubber reinforcing ply (4) is arranged radially inside a first carcass ply (1);
a second rubber reinforcing ply (5) is arranged between the first carcass ply (1) and a second carcass ply (2); and a third rubber reinforcing ply (6) is arranged between the second carcass ply (2) and a third carcass ply (3);
and the three rubber plies (4, 5, 6) have a different height in the radial direction and different thicknesses over the height of the side wall; and
wherein the radially inner end regions of all three rubber plies (4, 5, 6) are disposed on the axially inner side of the bead apex (9) and the ends (11) of the radially innermost, first, carcass ply (1) are led around the respective bead ring (8) and are overlappingly connected to the respective end (12) of the outer, third, carcass ply (3); and in that the middle carcass ply (2) terminates axially inside the bead apex (9) adjacent to the respective bead ring (8),
**characterized in that** the three rubber reinforcing plies (4, 5, 6) extend, starting from the bead apex region with mutually displaced ends, up to and beneath the edge region of the belt ply (10); and
**in that** all rubber reinforcing plies (4, 5, 6) and also the bead apex (9) consist of the same rubber mixture whose modulus of elasticity (E*) of the rubber reinforcing plies (4, 5, 6) and also of the bead apex (9) are the same as or greater than 9 MPa when measured at 70°C and the tanδ is the same as or smaller than 0.03, and indeed measured by means of "EPLEXOR": 10 Hz, 10 % prestress and 1 % DAS (double strain amplitude).

2. Pneumatic vehicle tires in accordance with claim 1, **characterized in that** all three rubber reinforcing plies (4, 5, 6) have a different thickness over their height and the middle rubber reinforcing ply (5) has a lesser thickness over an at least predominant part of the side wall height in comparison to the inner and outer rubber reinforcing plies (4, 6).

3. Pneumatic vehicle tires in accordance with one of the preceding claims, **characterized in that** the tread side ends of the rubber reinforcing plies (4, 5, 6) terminate with an increasing distance from the central plane (13) of the tire, starting from the radially innermost ply (4).

4. Pneumatic vehicle tires in accordance with one of the preceding claims, **characterized in that** the radially inner end of the radially outer rubber reinforcing ply (6) contacts the inner side of the bead apex (9).

5. Pneumatic vehicle tires in accordance with one of the preceding claims, **characterized in that** radially inner end of the outer rubber reinforcing ply (6) is simultaneously formed as a bead apex.

6. Pneumatic vehicle tires in accordance with one of the preceding claims, **characterized in that** all rubber reinforcing plies (4, 5, 6) are made so that they taper to a tip at their free ends in the cross-section.

7. Pneumatic vehicle tires in accordance with one of the preceding claims, **characterized in that** the central carcass ply (2) is connected in a region lying above the bead ring (8) to the radially inner carcass ply (1).

8. Pneumatic vehicle tires in accordance with one of the preceding claims, **characterized in that** the carcass plies (1, 2, 3) consist of rayon.

9. Pneumatic vehicle tires in accordance with one of the preceding claims, **characterized in that** the belt plies (10) consist of Kevlar or steel.

10. Pneumatic vehicle tires in accordance with claim 9, **characterized in that** the belt is stiffened by additional rubber between the belt plies.

11. Pneumatic vehicle tires in accordance with claim 1, **characterized in that** the hardness IRHD of the rubber reinforcing plies (4, 5, 6) and also of the bead apex (9) are the same as or greater than 80 when measured at room temperature, with the measurement taking place in accordance with DIN 53915 and with small samples taken from the tire being measured.

12. Pneumatic vehicle tires in accordance with claim 1, **characterized in that** the rubber reinforcing plies (4, 5, 6) consist of a rubber mixture which is composed of a polymer mix of NR/IR and BR with at least 50 parts NR/IR, a carbon black content of 50 to 60 parts, 5 to 8 parts zinc oxide, 2 parts stearic acid, 1.5 parts aging protection agent, and also at least 1 part of vulcanization accelerator and sulfur, with the sulfur proportion preferably including 4 or 5 parts and with rapidly injectable FEF carbon black preferably being used as carbon black.

13. Pneumatic vehicle tires in accordance with one of the preceding claims, **characterized in that** the rubber reinforcing plies (4, 5, 6) having a continuously changing thickness, have in total their greatest thickness in the region of the half side wall height, and also in the upper third of the side wall height.

14. Pneumatic vehicle tires in accordance with one of the preceding claims, **characterized in that**, when measured at approximately two thirds of the side wall height and at the half side wall height, the thickness of the inner rubber reinforcing ply (4) amounts to 3.0 mm and 3.2 mm respectively, the thickness of the middle rubber reinforcing ply (5) amounts to 2.8 and 2.9 mm respectively, and the thickness of the outer rubber reinforcing ply (6) amounts to 2.9 and 3.3 mm respectively, with a tolerance of ± 0.5 mm applying to all measured values.

15. Pneumatic vehicle tires in accordance with one of the preceding claims, **characterized in that**, when measured in the region of maximum bead thickness - side wall height W - the thickness of the inner rubber reinforcing ply (4) amounts to approximately 2.5 mm, the thickness of the central rubber reinforcing ply (5) amounts to approximately 1.9 mm and the thickness of the outer rubber reinforcing ply (6) amounts to approximately 6.9 mm, with a tolerance of ± 0.5 mm applying to all measured values.

16. Pneumatic vehicle tires in accordance with one of the preceding claims, **characterized in that**, when related to the axially outer edge of the breaker (10), the belt side end of the inner rubber reinforcing ply (4) is spaced by approximately 33 mm, the belt side end of the middle rubber reinforcing ply (5) is spaced by approximately 22 mm and the belt side end of the outer rubber reinforcing ply (6) is spaced by approximately 15 mm, with a tolerance of ± 2.5 mm applying to these measured values.

17. Pneumatic vehicle tires in accordance with one of the preceding claims, **characterized in that** the crown thickness (A2) measured at the center of the tire is 17.5 ± 0.8 mm and the tire thickness (C2) measured in the transition region of the shoulder and in the region of the ends of the rubber reinforcing plies (4, 5, 6) amounts to 18.5 ± 1.0 mm.

## Revendications

1. Pneumatique de véhicule, comportant une carcasse à plusieurs couches qui s'étend entre deux tringles de talon (8) comprenant des bandelettes talon (9), un agencement de ceinture prévu entre les couches de carcasse (1, 2, 3) et une bande de roulement, ainsi que des couches de renforcement en caoutchouc (4, 5, 6) agencées dans les zones de paroi latérale et remplissant des fonctions de soutien dans l'état dégonflé du pneumatique, dans lequel :
- une première couche de renforcement en caoutchouc (4) est agencée radialement à l'intérieur d'une première couche de carcasse (1),
- une deuxième couche de renforcement en caoutchouc (5) est agencée entre la première couche de carcasse (1) et une deuxième couche de carcasse (2), et
- une troisième couche de renforcement en caoutchouc (6) est agencée entre la deuxième couche de carcasse (2) et une troisième couche de carcasse (3),
et les trois couches en caoutchouc (4, 5, 6) présentent des hauteurs différentes en direction radiale et des épaisseurs différentes sur la hauteur de la paroi latérale, et
- les zones d'extrémité radialement intérieures de toutes les trois couches en caoutchouc (4, 5, 6) se trouvent sur le côté axialement intérieur de la bandelette talon (9), et la premières couche de carcasse (1) située radialement le plus à l'intérieur est menée par ses extrémités (11) autour de la tringle de talon respective (8) et est reliée en chevauchement à l'extrémité respective (12) de la troisième couche de carcasse extérieure (3), et la couche de carcasse médiane (2) se termine axialement à l'intérieur de la bandelette talon (9) au voisinage de la tringle de talon respective (8),
**caractérisé en ce que** :
les trois couches de renforcement en caoutchouc (4, 5, 6) s'étendent à partir de la zone de la bandelette talon par des extrémités décalées l'une par rapport à l'autre jusqu'au-dessous de la zone de bordure de la couche de ceinture (10), et
**en ce que** toutes les couches de renforcement en caoutchouc (4, 5, 6) ainsi que la bandelette talon (9) sont constituées en le même mélange de caoutchouc,
dont le module d'élasticité (E*) des couches de renforcement en caoutchouc (4, 5, 6) ainsi que de la bandelette talon (9), mesuré à 70°C, est égal ou supérieur à 9 Mpa et la valeur tanδ est égale ou inférieure à 0,03, et ceci par mesure au moyen du procédé "EPLEXOR" à 10 Hz, 10 % de précontrainte et 1 % DSA (Double Strain Amplitude).

2. Pneumatique de véhicule selon la revendication 1, **caractérisé en ce que** toutes les trois couches de renforcement en caoutchouc (4, 5, 6) possèdent des épaisseurs différentes sur leur hauteur, et **en ce que** la couche médiane de renforcement en caoutchouc (5) possède une épaisseur réduite sur une partie au moins prépondérante de la hauteur de paroi latérale par comparaison avec les couches intérieure et extérieure de renforcement en caoutchouc (4, 6).

3. Pneumatique de véhicule selon l'une des revendications précédentes, **caractérisé en ce que** les extrémités côté surface de roulement des couches de renforcement en caoutchouc (4, 5, 6) se terminent, à partir de la couche (4) située radialement le plus à l'intérieur, à une distance croissante depuis le plan médian (13) du pneumatique.

4. Pneumatique de véhicule selon l'une quelconque des revendications précédentes, **caractérisé en ce que** la couche radialement extérieure de renforcement en caoutchouc (6) s'appuie par son extrémité radialement intérieure contre le côté intérieur de la bandelette talon (9).

5. Pneumatique de véhicule selon l'une quelconque des revendications précédentes, **caractérisé en ce que** l'extrémité radialement intérieure de la couche extérieure de renforcement en caoutchouc (6) est réalisée simultanément comme bandelette talon.

6. Pneumatique de véhicule selon l'une quelconque des revendications précédentes, **caractérisé en ce que** toutes les couches de renforcement en caoutchouc (4, 5, 6) sont réalisées de manière à converger en pointe en section transversale vers leurs extrémités libres.

7. Pneumatique de véhicule selon l'une quelconque des revendications précédentes, **caractérisé en ce que** la couche de carcasse médiane (2) est reliée, dans une zone située au-dessus de la tringle de talon, à la couche de carcasse (1) radialement intérieure.

8. Pneumatique de véhicule selon l'une quelconque des revendications précédentes, **caractérisé en ce que** les couches de carcasse (1, 2, 3) sont constituées en rayonne.

9. Pneumatique de véhicule selon l'une quelconque des revendications précédentes, **caractérisé en ce que** les couches de ceinture (10) sont constituées en Kevlar ou en acier.

10. Pneumatique de véhicule selon la revendication 9, **caractérisé en ce que** la ceinture est rigidifiée par un caoutchouc supplémentaire entre les couches de ceinture.

11. Pneumatique de véhicule selon la revendication 1, **caractérisé en ce que** la dureté IRHD (degré international de dureté du caoutchouc) des couches de renforcement en caoutchouc (4, 5, 6) ainsi que de la bandelette talon (9), mesurée à la température ambiante, est égale ou supérieure à 80, la mesure s'effectuant selon la norme DIN 53915 et en mesurant de petits échantillons prélevés du pneumatique.

12. Pneumatique de véhicule selon la revendication 1, **caractérisé en ce que** les couches de renforcement en caoutchouc (4, 5, 6) sont constituées en un mélange de caoutchouc qui se compose d'un mélange de polymères de NR/IR (caoutchouc naturel/caoutchouc isoprène) et BR (caoutchouc polybutadiène) avec au moins 50 parts de NR/IR, une teneur en noir de carbone de 50 à 60 parts, 5 à 8 parts d'oxyde de zinc, 2 parts d'acide de stéarine, 1,5 part d'agent anti-vieillissement ainsi qu'au moins une part d'accélérateur de vulcanisation et de soufre, la part de soufre étant de préférence présente à raison de 4 à 5 parts et le noir de carbone étant de préférence du noir de carbone FEF à injection rapide.

13. Pneumatique de véhicule selon l'une quelconque des revendications précédentes, **caractérisé en ce que** les couches de renforcement en caoutchouc (4, 5, 6) présentant une épaisseur qui se modifie en continu possèdent leur épaisseur maximale dans la zone de la mi-hauteur de paroi latérale ainsi que dans le tiers supérieur de la hauteur de paroi latérale.

14. Pneumatique de véhicule selon l'une quelconque des revendications précédentes, **caractérisé en ce que** l'épaisseur de la couche intérieure de renforcement en caoutchouc (4), mesurée à environ deux tiers de la hauteur de paroi latérale et à mi-hauteur de paroi latérale, s'élève à 3,0 et à 3,2 mm, celle de la couche médiane de renforcement en caoutchouc (5) s'élève à 2,8 et à 2,9 mm, et celle de la couche extérieure de renforcement en caoutchouc (6) s'élève à 2,9 et à 3,3 mm, une tolérance de ± 0,5 mm s'appliquant à toutes les valeurs de mesure.

15. Pneumatique de véhicule selon l'une quelconque des revendications précédentes, **caractérisé en ce que** l'épaisseur de la couche intérieure de renforcement en caoutchouc (4), mesurée dans la zone de la tringle de talon maximale (hauteur de paroi latérale W) s'élève à environ 2,5 mm, celle de la couche médiane de renforcement en caoutchouc (5) s'élève à environ 1,9 mm, et celle de la couche extérieure de renforcement en caoutchouc (6) s'élève à environ 6,9 mm, une tolérance de ± 0,5 mm s'appliquant à toutes les valeurs de mesure.

16. Pneumatique de véhicule selon l'une quelconque des revendications précédentes, **caractérisé en ce qu'**en relation avec l'arête axialement extérieure de la ceinture (10), l'extrémité, côté ceinture, de la couche intérieure de renforcement en caoutchouc (4) est distante d'environ 33 mm, celle de la couche médiane de renforcement en caoutchouc (5) d'environ 22 mm, et celle de la couche extérieure de renforcement en caoutchouc (6) d'environ 15 mm, une tolérance de ± 2,5 mm s'appliquant à ces valeurs de mesure.

17. Pneumatique de véhicule selon l'une quelconque des revendications précédentes, **caractérisé en ce que** l'épaisseur de couronne (A2) mesurée au milieu du pneumatique s'élève à 17,5 ± 0,8 mm, et l'épaisseur de pneumatique (C2) mesurée dans la zone de transition de l'épaulement et dans la zone des extrémités des couches de renforcement en caoutchouc (4, 5, 6) s'élève à 18,5 ± 1,0 mm.
